# EUROPÄISCHE PATENTSCHRIFT

(11) **EP 2 563 547 B1**
(45) Veröffentlichungstag und Bekanntmachung des Hinweises auf die Patenterteilung: **17.06.2015**
(21) Anmeldenummer: 11713783.6
(22) Anmeldetag: 11.04.2011
(51) Int. Cl.: B23Q 11/10, B05B 17/06

(54) **MINIMALMENGENSCHMIERSYSTEM**
MINIMUM-QUANTITY LUBRICATION SYSTEM
SYSTÈME DE LUBRIFICATION À QUANTITÉS MINIMALES

(30) Priorität: 27.04.2010 DE 102010028241
(43) Veröffentlichungstag der Anmeldung: 06.03.2013
(73) Patentinhaber: Robert Bosch GmbH, 70442 Stuttgart (DE)
(72) Erfinder: ROSER, Jochen, 71636 Ludwigsburg (DE); DI NICOLANTONIO, Aldo, CH-4565 Recherswil (CH); DELFINI, Stefano, CH-2544 Bettlach (CH)
(86) Internationale Anmeldenummer: PCT/EP2011/055620
(87) Internationale Veröffentlichungsnummer: WO 2011/134776

(56) Entgegenhaltungen:
- DE-A1- 19 915 265

## Beschreibung

### Stand der Technik

Die Erfindung betrifft ein Minimalmengenschmiersystem zur Abgabe eines Fluids für die Kühlung und/oder Schmierung eines Materialbearbeitungsvorgangs.

Im Rahmen von Materialbearbeitungsvorgängen, insbesondere in der spanenden Bearbeitung tritt häufig eine hohe Beanspruchung des Arbeitswerkzeuges, beispielsweise einer Bohrerspitze, einer Schneidklinge, einer Gravurnadel, einer Meißelspitze, etc. auf. Diese Beanspruchung kann zur Erhitzung oder Zerstörung des Werkzeugs führen. Zur Erhöhung der Werkzeuglebensdauer werden Kühl- und Schmierzusatzbetriebsstoffe, insbesondere Kühlschmierflüssigkeiten wie Wasser-Öl-Gemische zur Kühlung und Schmierung des Werkzeugs an einem Werkzeugarbeitsbereich abgegeben, die ein Absenken der Werkzeugtemperatur und eine Schmierung der Bearbeitungsstelle bewirken. Solch ein Kühlschmiermittel, dass des weiteren als Fluid oder als Schmiermittelfluid bezeichnet wird, kann eine Flüssigkeit zur Kühlung von Materialbearbeitungsprozessen wie Wasser oder Alkohol oder ein Schmiermittel wie beispielsweise Rapsöl sein. Daneben werden Fluide zum integrierten Kühlen und Schmieren wie eine Öl/Wasser Emulsion mit fakultativ weiteren Additiven wie Rostschutzmittel, Schaumbildungsmittel oder ähnliches betrachtet.

Aus der DE 199 15 265 A1 ist bereits eine Verfahren und eine Vorrichtung zur Minimalmengen-Kühlschmierung bei Zerspanprozessen bekannt, das eine schnelle, einfache und flexible Einstellung der Verfahrensparameter ermöglicht. Hierzu werden die beiden - im Grunde unabhängigen - Prozesse der Zerstäubung und der Druckluftzufuhr bei der Minimalmengen-Kühlschmierung verfahrensmäßig voneinander entkoppelt, so dass eine getrennte Optimierung dieser beiden Prozesse auf die jeweilige Bearbeitungsaufgabe möglich wird.

Insbesondere bei handgehaltenen Arbeitswerkzeugen ist es vorteilhaft, die Menge an benötigten Kühlschmierflüssigkeiten zu reduzieren, da diese nur einen begrenzten Vorrat an Schmierstoffen mit sich führen können. Zur Verringerung der benötigten Menge an Kühlschmierstoffen sind Minimalmengenschmiersysteme bekannt, die geringe Mengen des Kühlschmierstoffs in aerosolartiger Form in einem Werkzeugarbeitsbereich, an dem das Werkzeug das zu bearbeitende Werkstück bearbeitet, abgeben können. Dieses Aerosolgemisch kann extern oder durch einen oder mehrere Zuführungskanäle im Werkzeug selbst an den Werkzeugarbeitsbereich geführt werden (innere Zuführung). Insbesondere bei Zuführung innerhalb des Werkzeugs kann der Kühlschmierstoff direkt am Werkzeugarbeitsbereich abgegeben und somit effizient genutzt werden. Eine Minimalmengenschmierung (MMS), die auch eine -kühlung bewirken kann, beschreibt in diesem Zusammenhang ein Kühl- und/oder Schmierverfahren mit einer geringen Fluidmenge, wobei bei der Kühlung Wärme durch Werkzeug und Materialspan abgeführt wird. Dabei werden nur geringe Fluidmengen, üblicherweise geringer als 100ml Kühlschmierstoff pro Stunde, oft weniger als 20ml pro Stunde verbraucht, wodurch sich die MMS deutlich von der Nassschmierung und -kühlung absetzt.

### Offenbarung der Erfindung

Es wird ein Minimalmengenschmiersystem für eine Werkzeugmaschine oder ein handgehaltenes Arbeitswerkzeug, insbesondere handgehaltenes Elektrowerkzeug vorgeschlagen, welches wenigstens eine Zerstäubereinheit zur Abgabe eines Fluids für die Kühlung und/oder Schmierung eines Materialbearbeitungsvorgangs aufweist. Das Minimalmengenschmiersystem umfasst mindestens eine Schwingeinheit, eine Elektronikeinheit zum Beaufschlagen der wenigstens einen Schwingeinheit mit wenigstens Steuer- und/oder Regelsignalen, eine Betriebsspannungseinheit zur Bereitstellung einer elektrischen Energieversorgung der Elektronikeinheit, einen Vorratsbehälter für das Schmiermittelfluid, wenigstens eine Düse, die der wenigstens einen Schwingeinheit zur Zuführung und zur Zerstäubung des Schmiermittelfluids in einem Werkzeugarbeitsbereich zugeordnet ist. Eine Fluidzuleitung verbindet den Vorratsbehälter zur selbstansaugenden, insbesondere kapillarwirkenden Zuführung des Schmiermittelfluids mit der Schwingeinheit und zumindest ein zumindest teilweise durch die Schwingeinheit verlaufender Fluidkanal verbindet die Schwingeinheit zur Impulsbeaufschlagung des Schmiermittelfluids mit der Düse. Die mindestens eine Schwingeinheit umfasst ein Volumen mit anregungsaktiven Material, welches im Betrieb von der Betriebsspannungseinheit elektrisch versorgt ist und von der Elektronikeinheit gesteuert oder geregelt ist, so dass das Schmiermittelfluid in dem Fluidkanal mit einem Zerstäubungsimpuls beaufschlagbar ist.

Durch die Ultraschallzerstäubung kann eine feine Zerstäubung bei geringem Tröpfchendurchmesser erreicht werden. Durch die selbstsaugende Wirkung der Fluidzuleitung kann auf eine Pumpe verzichtet werden. Die Kühlwirkung kann instantan, d.h. ohne Vor- oder Nachlaufzeit zu- und abgeschaltet werden und weist keine Ansprechzeit auf. Durch eine variable Ansteuerung der Schwingungseinheit kann eine exakte und minimale Volumendosierung bereitgestellt werden. Der geringe Betriebsenergieverbrauch und die geringen Anforderungen an weitere Anbauteile ermöglicht einen vorteilhaften Einsatz des Systems in mobilen Arbeitswerkzeugen, insbesondere in handgehaltenen Elektrowerkzeugen. Eine einfache Reinigung des Systems kann aufgrund der großen Kanalquerschnitte durchgeführt werden. Dabei kann die Schwingeinheit vorteilhaft einen Ultraschallanregungsaktor umfassen. Das Schwingungssystem der Schwingeinheit, das eine mechanische Schwingungsfrequenz erzeugt, umfasst neben dem anregungsaktiven Material angekoppelte Komponenten, die den Ultraschall verstärken (Booster) und zu einem Wirkungsort übertragen (Sonotrode). Es können mehrere Schwingeinheiten mit gleicher oder unterschiedlicher Anregungsfrequenz betrieben werden, die dazu dienen, eine oder mehrere Fluidnebel mit unterschiedlichen Tröpfchengrößen zu erzeugen.

Das Minimalmengenschmiersystem erlaubt eine feine Zerstäubung mit besonders geringem Tröpfchendurchmesser im Bereich von höchstens 200 µm, insbesondere im Bereich von höchstens 70 µm. Das Sprühen erfolgt praktisch geräuschlos. Die Ultraschallzerstäubung kann unabhängig von einem gegebenenfalls vorhandenen Luftstrom erfolgen, so dass dieser Luftstrom spezifisch für den optimalen Transport der Fluidtröpfchen ausgelegt werden kann. Hierdurch ist die Fluidabgabe gleichmäßiger und der Fluidnebel kann gezielt geführt werden, wobei unerwünschte Kühlschmiermittelspritzer reduziert und gegebenenfalls komplett vermieden werden können. Da die Ultraschallzerstäubung des Fluids zudem unabhängig von der Medienzuführung erfolgt, können trotz der geringen Tröpfchengröße relativ große Zuführungs-Kanalquerschnitte im Bereich bis 2 mm, typisch bis 1 mm zur Förderung des Fluids zum Zerstäuber gewählt werden, so dass eine Reinigung der Kanäle vereinfacht wird. Es können daher auch Fluide mit relativ großer Viskosität eingesetzt werden.

Gemäß einer vorteilhaften Weiterentwicklung der Erfindung kann die Elektronikeinheit ausgebildet sein, um die wenigstens eine Schwingeinheit in einer Resonanzfrequenz f_res zu betreiben, wobei vorzugsweise die Elektronikeinheit eine Regeleinheit mit Frequenzanpassung zur Nachführung der Resonanzfrequenz der wenigstens einen Schwingeinheit umfasst, um die wenigstens eine Schwingeinheit in einer Resonanzfrequenz zu betreiben, wodurch eine möglichst hohe Leistungsausbeute erreicht und eine kompakte Bauweise der wenigstens einen Schwingeinheit ermöglicht werden kann. Hierzu kann eine ausreichend hohe Güte der Schwingeinheit, bzw. des Schwingungssystems, ausgenutzt werden, um mit hoher Effizienz und geringem Energieverbrauch eine hohe mechanische Ausgangsleistung zur Verfügung zu stellen, wobei die Güte des ungedämpften Schwingungssystems Werte von typischerweise über 100 bis über 500 erreichen kann. Wird die Elektronikeinheit mit einer Regeleinheit versehen, die der Frequenzanpassung zur Nachführung der Resonanzfrequenz der wenigstens einen Schwingeinheit dient, so kann die Resonanzfrequenz kontinuierlich angepasst werden, wenn zum Beispiel wegen einer unterschiedlichen Viskosität des abzugebenden Fluids oder unterschiedlichen Einsatzbedingungen, wie etwa bei niedrigen oder hohen Einsatztemperaturen oder Laständerungen sich die Resonanzfrequenz der wenigstens einen Schwingeinheit ändert. Damit wird im Betrieb stets eine optimale Leistungsausbeute ermöglicht.

Gemäß einer günstigen Weiterbildung der Erfindung kann das anregungsaktive Material zumindest einer Schwingeinheit piezoelektrisch oder magnetostriktiv ausgebildet sein, wobei vorzugsweise die wenigstens eine Schwingeinheit an ihrem freien Ende eine Schwingungsamplitude im Bereich von 2 µm bis 200 µm erreichen kann. Somit kann das anregungsaktive Material zumindest einer Schwingeinheit ein piezoelektrisches Material sein, insbesondere eine Piezokeramik, so dass sich bei Anlegen einer elektrischen Spannung das piezoelektrische Material verformt. Alternativ oder auch additiv können ein oder mehrere Schwingeinheiten auch mittels eines magnetostriktiven Materials angetrieben werden. Diese verformen ihr Volumen durch ein angelegtes magnetisches Feld. Das antreibende magnetische Feld kann mittels einer stromdurchflossenen Magnetspule und mittels eines Eisenkerns an das magnetostriktive Material abgegeben werden. Somit lässt sich der Anregungsaktor als piezoelektrischer Langevinschwinger oder als Magnetostriktionsschwinger ausbilden. Dabei ist es insbesondere weiterhin vorteilhaft, wenn die wenigstens eine Schwingeinheit an ihrem freien Ende eine Schwingungsamplitude im Bereich von 2 µm bis 200 µm erreichen kann. Eine entsprechend hohe Schwingamplitude ist vorteilhaft für eine effiziente Tröpfchenerzeugung im Fluidstrom und damit für einen feinen Nebel des Fluids.

Gemäß einer weiteren vorteilhaften Ausführungsform kann die Betriebsfrequenz der wenigstens einen Schwingeinheit im Bereich zwischen 10 kHz und 1000 kHz, vorzugsweise zwischen 15 kHz und 60 kHz, besonders bevorzugt über 20 kHz, insbesondere zwischen 35 kHz und 45 kHz, etwa bei 40kHz, liegen. Aufgrund einer Anregungsfrequenz im Ultraschallbereich sinkt mit steigender Frequenz die Baugröße der Anregungskomponenten bei jedoch zunehmender mechanische Belastung des Schwingungssystems, wobei sich im ausgewählten Frequenzbereich vorteilhafte Größenverhältnisse bei hoher Ausgangsleistung mit günstigem Gewicht des Minimalmengenschmiersystems ergeben, was die Anwendung als handgehaltenes Minimalmengenschmiersystem bzw. bei der Integration in einem handgehaltenen Arbeitswerkzeug erleichtert.

Vorteilhaft kann eine Menge an abzugebendes Kühlschmierfluids mittels einer Zeittaktregelung durch die Elektronikeinheit einstellbar sein. So ist denkbar, dass die Elektronikeinheit zur Regelung eines Fluidabgabevolumens eine taktbare Anregung der Schwingungseinheit insbesondere mit einer Periodendauer von 10-5000ms, bevorzugt 50 bis 1200ms vornehmen kann. Eine einfache Zeittaktregelung der Fluidabgabemenge kann auf mechanische Dosiermittel verzichten, wobei eine hochpräzise und effiziente Fluidabgabe durch eine elektronische Ansteuerreglung der Schwingungseinheit ermöglicht werden kann.

Gemäß einer vorteilhaften Weiterbildung kann zur Richtungsaufprägung und/oder zur Aufweitung des Fuidnebels ein durch ein Gebläse erzeugter Luftstrom eingesetzt sein, der in der Düse geführt sein kann. Der Luftstrom unterstützt die Zerstäubung des Fluidnebels und lenkt diesen auf die zu kühlende und/oder zu schmierende Bearbeitungsstelle, so dass ein geringer Fluideinsatz, eine hohe Kühl- und Schmierwirkung und eine geringe Verschmutzung außenliegender Werkzeug- und Werkstückbereiche ermöglicht wird.

Gemäß einer weitern vorteilhaften Weiterbildung kann die Düse und/oder der Fluidkanal und/oder die Fluidzuleitung zur Beeinflussung eines Fluidabgabevolumens und bevorzugt zur Erzielung einer Kapillarwirkung zumindest eine Querschnittsverjüngung umfassen, und/oder der Fluidkanal ein- oder mehrfach gewinkelt oder gebogen durch die Schwingeinheit verlaufen. Eine Querschnittsverjüngung reguliert den Volumenstrom und kann durch den verringerten Querschnitt Kapillarkräfte sowohl ein Rückfliesen als auch ein selbständiges Ausfließen des Fluids verhindern. Dabei ist denkbar, die Querschnittsverjüngung anpassbar, insbesondere elektrisch oder mechanisch regelbar beispielsweise mittels einer elektrisch oder mechanisch wirkenden Drossel, Ventil oder dergleichen auszugestalten, um aktiv eine Volumenstromregelung und/oder eine Kapillarwirkung einstellbar zu machen. Eine einfache oder mehrfache Abwicklung oder gebogenen Ausgestaltung des Fluidkanals kann eine verbesserte Impulsübertragung von Schwingungseinheit auf das zu zerstäubende Fluid sicherstellen, sowie ein höheres Durchflussvolumen ermöglichen.

Gemäß einer weiteren vorteilhaften Weiterbildung kann die Fluidzuleitung in Schwingungsachsenrichtung an die Schwingeinheit angekoppelt sein, oder die Fluidzuleitung im wesentlichen rechtwinklig zur Schwingungsachsenrichtung im Bereich eines Schwingungsknotens an die Schwingeinheit angekoppelt sein. Eine axiale Ankopplung der Fluidzuleitung in Schwingungsachsenrichtung ermöglicht eine einfache Einkopplung des Fluids in den pulsierenden Bereich der Schwingungseinheit, bei der der Fluidkanal nur geringen mechanischen Belastungen ausgesetzt wird. Des weiteren ist eine seitliche, im wesentlichen rechtwinklige Einkopplung an einer Schwingungsknotenstelle denkbar, an der eine mögliche Lagerstelle der Schwingungseinheit angeordnet ist, wobei der Fluidkanal kaum mechanisch belastet wird.

In einem nebengeordneten Aspekt betrifft die Erfindung eine Werkzeugmaschine oder ein handgehaltenes Arbeitswerkzeug, insbesondere ein handgehaltenes Elektrowerkzeug, die bzw. das ein erfindungsgemäßes Minimalmengenschmiersystem umfasst, wobei das Minimalmengenschmiersystem zur Kühlung und/oder Schmierung eines Werkzeugarbeitsbereichs in einem Gehäuse der Werkzeugmaschine bzw. des Arbeitswerkzeugs umfasst ist. Somit wird vorgeschlagen, ein erfindungsgemäßes Minimalmengenschmiersystem in eine bereits bekannte Werkzeugmaschine zu integrieren, wobei eine solche Werkzeugmaschine oder ein handgehaltenes Elektrowerkzeug beispielsweise eine Drehmaschine, Fräsmaschine, Stichsäge, Kreissäge, Säbelsäge, Winkelschleifer, Ständer- oder handgehaltene Bohrmaschine, Schlagbohrmaschine, Bohrhammer, Diamantbohrsystem, Gravurschleifsystem oder ein vergleichbares materialabtragendes oder materialbearbeitendes Werkzeugmaschinensystem sein kann.

Gemäß einer vorteilhaften Weiterentwicklung der erfindungsgemäßen Werkzeugmaschine oder des handgehaltenen Elektrowerkzeugs kann die Werkzeugmaschine oder das Elektrowerkzeug zumindest eine Schwingeinheit zur Erzeugung zumindest einer Werkzeugarbeitsbewegung umfassen, wobei die Schwingeinheit gleichzeitig zum Betrieb des Minimalmengenschmiersystems ausgelegt ist. Hierzu wird vorteilhaft das Vorhandensein einer Ultraschallschwingungseinheit, die zur Bereitstellung zumindest einer Arbeitsbewegung bereits in der Werkzeugmaschine bzw. in dem handgehaltenen Elektrowerkzeug vorhanden ist, zur Erzeugung eines Zerstäubungsimpulses des Fluids ausgenutzt. In der Werkzeugsonotrode mit eingespanntem oder angekoppeltem Werkzeug können ein oder mehrere Fluidkanäle angeordnet oder geeignet befestigt sein, die zur Zerstäubung des Fluids geeignet sind. Beispielhaft kann solch ein Minimalmengenschiersystem in eine ultraschallangetriebene Werkzeugmaschine oder in einem ultraschallangetriebenen und handgehaltenen Elektrowerkzeug wie Ultraschallmesser, Ultraschallbohrer, Ultraschallfliesenschneidsystem, Ultraschallpoliersystem, Ultraschallschleifsystem oder ähnliches integriert werden.

Gemäß einer weiteren vorteilhaften Weiterentwicklung kann die Werkzeugmaschine oder das Elektrowerkzeug ein rotierbares Werkzeug umfassen und zumindest die Schwingeinheit mit Düse am oder im Werkzeug mitrotierbar angeordnet sein, wobei bevorzugt die Fluidzuleitung die Schwingeinheit über eine rotierbare Medienkupplung mit einem außerhalb des Werkzeugbereichs befindlichen Vorratsbehälter verbindet, um eine innere Fluidzuführung bereitzustellen. Hierbei kann die rotierende Werkzeugbewegung konventionell, beispielsweise mittels eines Elektromotors erzeugt werden. Eine rotierbare Medienkupplung kann Fluid eines Vorratsbehälters aus einem stationären Werkzeugbereich in einen inneren Kanal eines rotierenden Werkzeugs, beispielsweise eine Frässcheibe oder einen Bohrer leiten. Die Impulsbeaufschlagung kann im stationären Bereich mittels einer Leistungsultraschallschwingungseinheit erfolgen, wobei die Schwingungseinheit auch im rotierenden Bereich angeordnet sein kann.

In einem weiteren nebengeordneten Aspekt betrifft die Erfindung ein Nachrüstsystem für eine Werkzeugmaschine, die ein erfindungsgemäßes Minimalmengenschmiersystem umfasst, wobei das Nachrüstsystem zur Kühlung und/oder Schmierung eines Werkzeugarbeitsbereichs an einer Werkzeugmaschine nachrüstbar angeordnet oder befestigt werden kann. Somit ist ein variables Minimalmengenschmiersystem vorgeschlagen, dass nachrüstbar an konventionelle Werkzeugmaschinen oder handgehaltene Arbeitswerkzeuge angeordnet oder befestigt werden kann. Das Nachrüstsystem kann elektrisch autark aktivierbar sein, allerdings ist ebenfalls denkbar, das System an die Elektrik der Werkzeugmaschine bzw. des handgehaltenen Elektrowerkzeug anzuschließen, um eine Aktivierung bzw. Deaktivierung mit dem Werkzeugeinsatz zu synchronisieren.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Fig. 1: ein Minimalmengendosiersystem nach dem Stand der Technik;
- Fig. 2: eine Prinzipdarstellung eines zweiten und dritten Minimalmengenschmiersystem nach dem Stand der Technik für eine äußere und innere Schmierung bzw. Kühlung;
- Fig. 3: ein erstes Ausführungsbeispiel eines handgehaltenen Elektrowerkzeugs mit Minimalmengenschmiersystems im Längsschnitt;
- Fig. 4: ein zweites Ausführungsbeispiel eines handgehaltenen Elektrowerkzeugs mit Minimalmengenschmiersystem im Längsschnitt;
- Fig. 5: eine Detaildarstellung einer Düse des Ausführungsbeispiels der Fig. 4;
- Fig. 6: eine Blockdarstellung eine beispielhafte Ansteuerschaltung eines Minimalmengenschmiersystems;
- Fig. 7: ein Ausführungsbeispiel eines externen Minimalmengenschmiersystem zur Schmierung und Kühlung eines Sägeblatts;
- Fig. 8: Prinzipdarstellung zweier weiterer Ausführungsbeispiele eines internen Minimalmengenschmiersystems für ein handgehaltenes Elektrowerkzeug mit Schwingungseinheit;
- Fig. 9: eine Perspektivdarstellung eines handgehaltenen Elektrowerkzeugs mit Minimalmengenschmiersystem;
- Fig. 10: eine stationäre Werkzeugmaschine mit einem nachgerüsteten Ausführungsbeispiel eines Minimalmengenschmiersystem.

### Ausführungsform der Erfindung

In den Figuren sind gleiche oder gleichartige Komponenten mit gleichen Bezugszeichen beziffert.

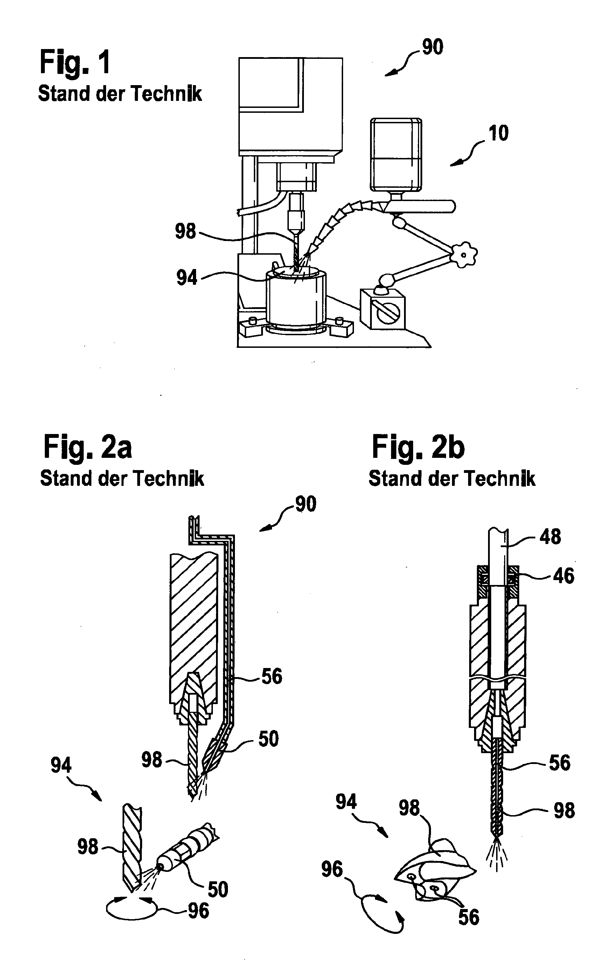

Die Figuren 1 und 2 stellen aus dem Stand der Technik bekante Minimalmengenschmiersysteme zur Kühlung und/oder Schmierung eines Bohrerwerkzeugs 98 einer Ständerbohrmaschine 90 dar. In Fig. 1 ist ein autark arbeitendes Minimalmengenschmiersystem 10 dargestellt, dass ein Kühlmittelfluid an die Bohrstelle des Werkzeugarbeitsbereichs 94 einer Ständerbohrmaschine 90 abgibt. Das Schmiersystem 10 kann flexibel an verschiedene Werkzeugmaschinen 90 zur Kühlung und/oder Schmierung beigestellt werden. Die Zerstäubung erfolgt mittels Druckluft, die durch einen externen Kompressor erzeugt und in die Zerstäuberdüse eingekoppelt wird. Figuren 2a und 2b stellen in Prinzipdarstellungen eine äußere bzw. innere Minimalmengenschmierung dar. Während in Fig. 2a die Fluidzerstäubung am Werkzeugarbeitsbereich 94 durch eine externe Düse 50 erfolgt, wobei das Fluid 30 mittels eines Fluidkanals 56 zugeführt wird, erfolgt die Schmiermittelfluidzuführung in Fig. 2b durch eine Hohlspindel innerhalb des Bohrwerkzeugs 98, wobei das Fluid 30 aus einem stationären Werkzeugbereich durch eine Fluidzuleitung 48 mittels einer Medienkupplung 46 in den rotierenden Bohrerbereich überführt wird und unmittelbar am Bohrort austreten kann.

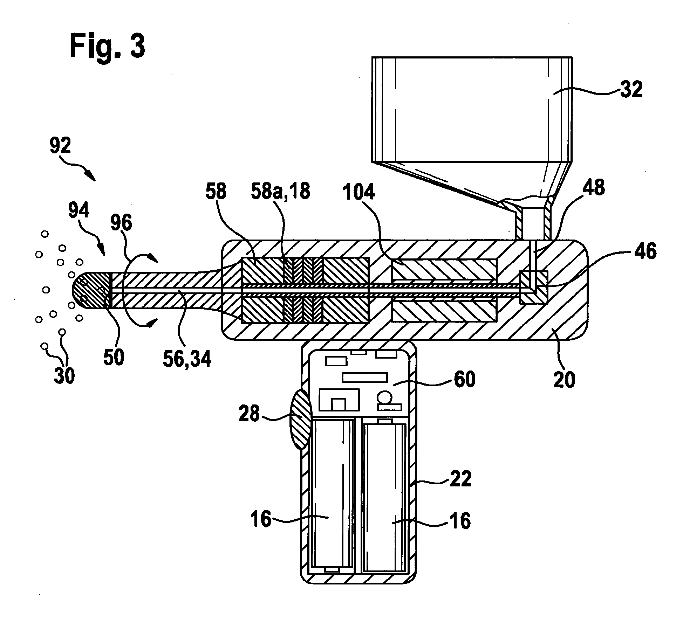

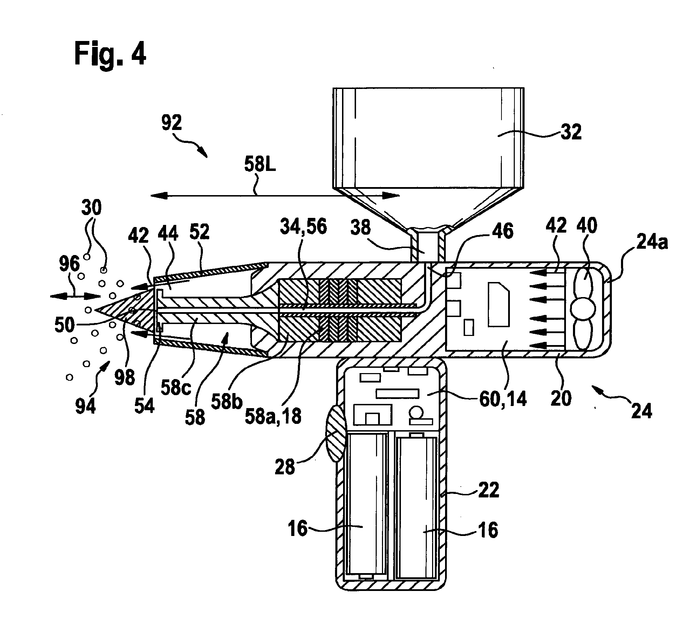

Die Figur 3 stellt ein erstes Ausführungsbeispiel eines handgehaltenen Elektrowerkzeugs 92 mit integriertem Minimalmengenschmiersysteme dar, wobei das Elektrowerkzeug 92 konventionell mittels eines Elektromotors 104 angetrieben wird. Das Elektrowerkzeuge 92 kann ein Ultraschallbohrsystem sein. Die bei der Bearbeitung entstehende Wärme an der Spitze des Bohrwerkzeugs 98 wird durch die Zerstäubung eines Schmiermittelfluids 30 aus einem Vorratsbehälter 32 abgeführt. Hierbei rotiert die Werkzeugspitze 98 in der durch einen Pfeil dargestellten Werkzeugarbeitsbewegungsrichtung 96. Der Vorratsbehälter 32 ist in dem Elektrowerkzeuge 92 integriert und führt das Schmiermittelfluid 30 über eine Fluidzuleitung 48 aus einem stationären Werkzeugbereich durch eine Medienkupplung 46 in einen inneren Fluidkanal 34, 56 des Werkzeugs 98. Die Werkzeugarbeitsbewegung 96 wird mittels eines Elektromotors 104 erzeugt, wobei in longitudinaler Arbeitsrichtung 98 hochfrequente Longitudinalbewegungen in eine Schwingungsachsenrichtung 100 durch eine Schwingungseinheit 58 erzeugt werden, um eine Fluidzerstäubung zu ermöglichen und gegebenenfalls eine "Bohrhammerwirkung" zu erzielen. Das Schmiermittelfluid 30 tritt durch eine Düse 50 am Werkzeugkopf 98 aus und bewirkt eine Schmierung und Kühlung des Arbeitsbereichs 94. Die übrigen Komponenten des in der Figur 3 dargestellten ersten Ausführungsbeispiels werden in Zusammenhang mit dem in Figur 4 dargestellten Ausführungsbeispiel näher erläutert, allerdings mit dem Unterschied dass das Werkzeug 92 keinen Booster 58b und keine Sonotrode 58c umfasst, sondern lediglich eine Schwingungseinheit 58 mit Konverter 58a, der aus anregungsaktiven Piezoscheiben, die zwischen zwei Metallteilen eingespannt sind, besteht.

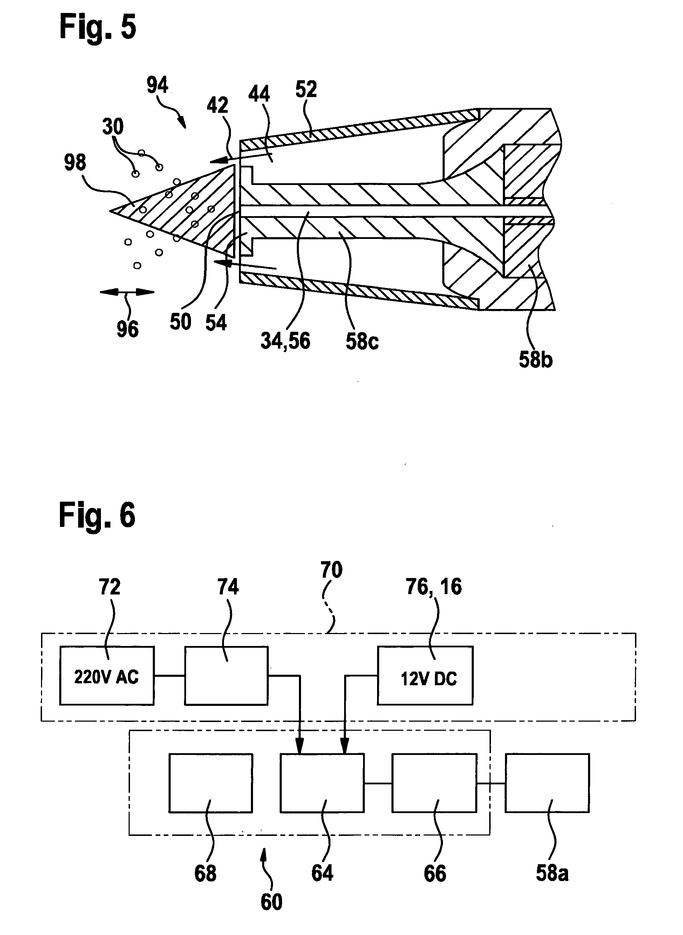

Die Figuren 4 und 5 zeigen eine zweite Ausführung eines handgehaltenen Elektrowerkzeugs 92 mit integrierter Schwingungseinheit 58 zur Erzeugung einer Arbeitsbewegung. Die Schwingungseinheit 58 bildet gleichzeitig ein Teil des Minimalmengenschmiersystems 10, welches aus einer Düse 50 einen feinen Nebel eines Fluids 30 zur Kühlung oder Schmierung eines Arbeitsbereichs 94 abgibt. Fig. 4 zeigt einen Überblick über das Elektrowerkzeug 92 in Seitenansicht und Fig. 5 stellt ein Detail der Düse 50 dar. Das Elektrowerkzeug 92 ist z.B. als Gravurwerkzeug ausgebildet, mit dem Werkstückoberflächen angeritzt werden können. Das Elektrowerkzeug 92 weist ein Gehäuse 20 auf, das ein Griffteil 22 und ein Maschinenteil 24 aufweist. Das Griffteil 22 kann von einem Anwender bequem in der Hand gehalten werden, wobei dies so angeordnet ist, dass ein Schwerpunkt des Elektrowerkzeugs 92 im Bereich des Griffteils liegt. Im Maschinenteil 24 ist eine Schwingeinheit 58 sowie eine Elektronikeinheit 60 zum Beaufschlagen der Schwingeinheit 58 mit wenigstens Steuer- und/oder Regelsignalen angeordnet.

Ferner umfasst das Elektrowerkzeug 92 eine Betriebsspannungseinheit 70, die innerhalb des Gehäuses 20 angeordnet ist, beispielsweise einen Akkumulatorpack 16 zur netzlosen Versorgung der Elektronikeinheiten 14 und 60. Die Batteriespannungs- und Elektronikeinheit 60 ist mit der Schwingeinheit 58 verbunden, in welcher ein Konverterbereich mit anregungsaktivem Material 18, z.B. piezoelektrisches oder magnetostriktives Material, angeordnet ist. Wird das anregungsaktive Material 18 der Schwingeinheit 58 mit elektrischen Signalen beaufschlagt, so wird in dem anregungsaktiven Material 18 eine hochfrequente mechanische Schwingung angeregt, die auf ein freies Ende 54 der Schwingeinheit 58 in der Düse 50 übertragen wird, so dass neben der Arbeitsschwingung der Werkzeugsonotrode 98 ein im Zuführkanal 34 der Schwingeinheit 58 zugeführtes Kühl- und Schmiermittelfluid 30 in der Düse 50 in feinste Tröpfchen zerteilt wird. Am Maschinengehäuse 24a ist eine Schnittstelle 38 für einen Vorratsbehälter 32 für das Fluid 30 vorgesehen, z.B. eine Schnellkupplung, auf das der Vorratsbehälter 32, etwa ein Vorratsbehälter, aufgesteckt werden kann. Damit ist ein autarkes Arbeiten mit dem Elektrowerkzeug 92 möglich. Der Vorratsbehälter 32 kann auch wie in Fig. 3 fest mit dem Elektrowerkzeug 92 verbunden sein. Optional kann auch ein Anschluss für einen stationäre Vorratsbehälter 32 vorgesehen sein, etwa eine Schlauchkupplung.

Die ausgeführte Schwingeinheit 58 umfasst ein System aus Sonotrode 58c, Booster 58b und Konverter 58a zur Anpassung und Übertragung der hochfrequenten mechanischen Schwingung. Alternativ kann die Schwingeinheit 58 nur aus einem einzelnen Konverter bestehen. Je nach Nutzervorgabe kann das Minimalmengenschmiersystem 10 zusammen mit der Werkzeugsonotrode 50 mittels eines Bedienteils 28 ein- und ausgeschaltet werden. Das Bedienteil 28 kann für das elektrische Ein- und Ausschalten der Elektronikeinheit sowie zur Freigabe des Fluids 30 in die Düse 50 ausgebildet sein, etwa durch zwei Schalter, etwa einen Ein/Ausschalter und einen Freigabeschalter, die in Kombination betrieben werden. Daneben ist die Anordnung eines Temperatursensors im Werkzeugkopf denkbar, der das Minimalmengenschmiersystem bei Temperaturüberschreitung zur Kühlung aktivieren kann. Die Elektronikeinheit 60 kann vorteilhaft ausgebildet sein, um die wenigstens eine Schwingeinheit 58 in einer Resonanzfrequenz f_res zu betreiben, wobei vorzugsweise die Elektronikeinheit 60 eine Regeleinheit 68 mit Frequenzanpassung zur Nachführung der Resonanzfrequenz f_res der wenigstens einen Schwingeinheit 58 umfasst.

Die Schwingeinheit 58 kann an ihrem freien Ende 54 eine Schwingamplitude im Bereich von 2 µm bis 200 µm erreichen. Das freie Ende 54 ragt in Luftzuführungskanäle 44 der Düse 50 hinein und zerstäubt dort das Fluid 30 in feinste Tröpfchen. Das Fluid kann mittels Schwerkraft aus dem Vorratsbehälter 32 in einen von der Fluidzuleitung 48 umfassten Zuführungskanal 34 von hinten durch die Schwingeinheit 58 oder alternativ durch einen Kanal 36 seitlich zugeführt werden, um im Inneren des freien Schwinger-Endes 54 zur Düse 50 geführt zu werden. Das Fluid 30 kann durch einen Luftstrom 42, 44 der von einem Gebläse 40 erzeugt ist, von der Düse 50 wegbefördert werden. Das Gebläse 40 kann beispielsweise an einer der Düse 50 gegenüberliegenden Seite des Maschinengehäuses 24a angeordnet sein. Der Luftstrom 42, 44 kann zur Richtungsaufprägung und/oder zur Aufweitung des Fluidnebels eingesetzt sein. Zum Transport des Fluids 30 zur Düse 50 wird ein selbstansaugender Effekt bedingt durch die Erdanziehung oder durch eine Kapillarwirkung der Fluidzuleitung 48 ausgenutzt. Die Betriebsfrequenz der Schwingeinheit 58 liegt beispielsweise im Bereich zwischen 10 kHz und 1000 kHz, vorzugsweise zwischen 15 kHz und 60 kHz, vorzugsweise über 20 kHz, insbesondere bei etwa 40 kHz. Dies ermöglicht eine vorteilhaft kompakte Bauweise des Elektrowerkzeugs 92, da die Schwingeinheit 58 in ihrer Längserstreckung 58L an die Wellenlänge λ der Erregerfrequenz des anregungsaktiven Materials 18 angepasst werden kann.

Fig. 6 zeigt ein schematisches Diagramm der Verknüpfung der einzelnen Betriebseinheiten eines ultraschallangeregten Minimalmengenschmiersystems 10, das in einer Werkzeugmaschine 90 oder in einem Arbeitswerkzeug, insbesondere in einem Elektrowerkzeug 92 integriert oder zusätzlich angebaut sein kann. Schematisch betrachtet umfasst das ultraschallangeregten Minimalmengenschmiersystem 10 eine Betriebsspannungseinheit 70, die eine elektrische Betriebsspannung zum Betrieb des Minimalmengenschmiersystems 10 zur Verfügung stellt. Die Betriebsspannungseinheit 70 umfasst ein Netzspannungsmodul 72, 74, das aus einer Spannung aus dem öffentlichen Spannungsnetz, beispielsweise einer 240 Volt Wechselspannung, eine geeignete Gleichspannung, z.B. 24 oder 12 Volt, erzeugen kann, wobei die Betriebsspannungseinheit 70 sowohl zur Versorgung des Minimalmengenschmiersystems 10, als auch zur Spannungsversorgung des handgehaltenen oder stationären Werkzeugs 90, 92 dienen kann. In einer anderen Ausführungsform umfasst die Betriebsspannungseinheit 70 anstelle der Komponenten 72, 74 ein Akkuspannungsmodul 76, das die Spannungsversorgung mittels eines Akkumulatorpacks 16 oder einer Batterie bereitstellt. An der Betriebsspannungseinheit 70 ist eine Elektronikeinheit 60 angeschlossen, in der sich eine Regeleinheit 68 befindet. Die Regeleinheit 68 erzeugt elektrische Regel- und/oder Steuersignale zum Betrieb der Schwingeinheit 58. Hierzu kann die Regeleinheit 68 eine Rückkopplungsfunktion aufweisen, um eine Resonanzfrequenz des mechanischen Antriebssystems der Schwingeinheit 58 bei sich ändernden Resonanzbedingungen nachzuführen und eine frequenzangepasste Spannungsversorgung zum Betrieb der Schwingeinheit 58 zur Verfügung zu stellen. Die Regeleinheit 68 ist an eine Leistungsstufe 64 und ein entsprechendes Anpassungsnetzwerk 66 angeschlossen.

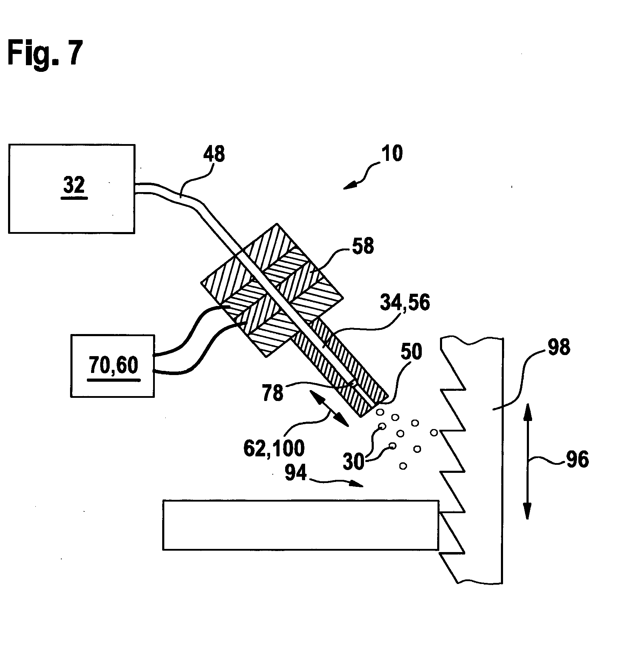

In der Fig. 7 ist eine Prinzipdarstellungen eines Detailbereichs einer Stichsäge 92 mit Sägeblatt 98 zum Sägen eines Werkstücks dargestellt. Das Sägeblatt 98 bewegt sich in einer durch eine Doppelpfeil dargestellten Werkzeugarbeitsbewegungsrichtung 96 auf und ab. Im Werkzeugarbeitsbereich 94 wird ein Kühl- und Schmiermittelfluid 30 mittels einer Düse 50 eines Minimalmengenschmiersystems 10 eingebracht. Das Minimalmengenschmiersystem 10 ist über eine Fluidzuleitung 48 mit einem externen Vorratsbehälter 32 verbunden. Die Schwingungseinheit 58 umfasst einen Konverter und wird mittels einer Betriebsspannungseinheit 70 und einer Elektronikeinheit 60 in Schwingungen versetzt. Das Schmiermittelfluid 30 durchfließt die Schwingungseinheit 58 mittels eines Zuführungskanals 34, wobei an der Düse 50 eine Querschnittsverjüngung 78 angeordnet ist, um eine Kapillarwirkung zu erzielen. Der Zerstäubungsnebel des Fluids 30 tritt an der Düsenöffnung 50 aus und kühlt den Sägebereich.

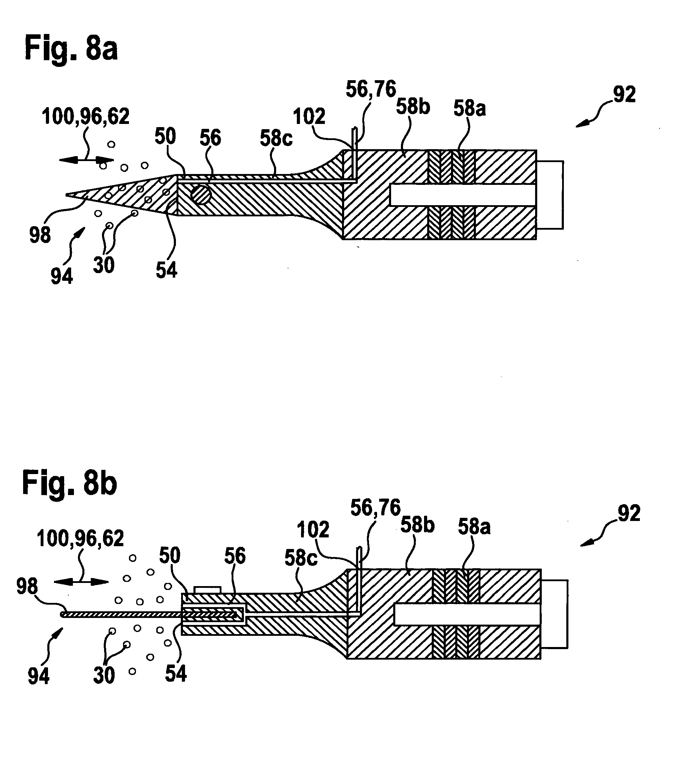

In der Fig. 8 sind zwei Varianten eines internen Minimalmengenschmiersystems 10, das in einem ultraschallbetriebenen Elektrowerkzeug 92 integriert ist, prinzipienhaft dargestellt. Das Werkzeug 98 wird durch das zerstäubte Fluid 30, dass über eine oder mehrere Düsen 50 am Werkzeugkopf vernebelt wird, gekühlt. In dem Elektrowerkzeug 92 ist bereits eine Schwingungseinheit 58 zur Erzeugung der Werkzeugarbeitsbewegung 96 in Schwingungsachsenrichtung 100 integriert. Die dargestellte Schwingungseinheit 58 umfasst einen Konverter 58a, einen Booster 58b und eine Sonotrode 58c, kann allerdings auch aus nur einem Konverter bestehen. Diese Schwingungseinheit 58 wird vorteilhaft zur Generierung eines Zerstäubungsimpulses 62 genutzt, indem ein Fluid 30 durch einen seitlichen Fluidzuführungskanal 36, der an einem Schwingungsknoten 102 der Schwingungseinheit 58 angeordnet ist, Fluid 30 durch die Schwingungseinheit 58 leitet. Das Fluid 30 nimmt entlang des Fluidkanals 56 den Zerstäubungsimpuls 62 auf, und wird an der Stirnfläche der Sonotrode 58c durch die Düse 50 zerstäubt. Fig. 8a stellt einen Fugenmeißel 92 dar, wobei ein meißelförmiges Werkzeug 98 in linear oszillierende Schwingungen 96 durch die Schwingungseinheit 58 versetzt wird, die zugleich den Zerstäubungsimpuls 62 zur Zerstäubung des Fluids 30 ausüben. In Fig. 8b ist eine Gravurnadel 98 dargestellt, wobei diese durch mehrere Düsen 50 gekühlt wird, die durch eine mehrfache Abwinkelung und Aufspreizung des Fluidkanals 56 ausgebildet sind, wodurch der Zerstäubungsimpuls 62 besser aufgenommen und feiner verteilt abgegeben werden kann. Hierzu sind an der Stirnfläche des Schwingers 58 mehrere Düsenöffnungen 50 angeordnet. Alternativ kann der Zuführungskanal 36 nicht seitlich, sondern axial von hinten erfolgen.

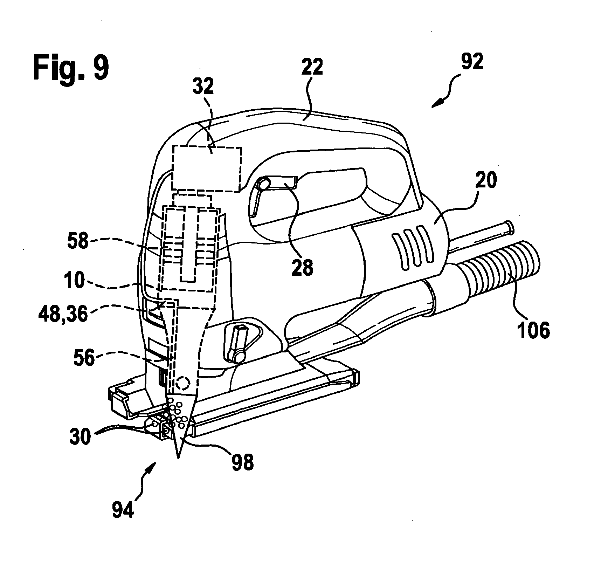

Die Fig. 9 stellt perspektivisch ein Ultraschallwerkzeug 92 mit integriertem Minimalmengenschmiersystem dar, wie es in der Fig. 8 prinzipienhaft dargestellt ist. Das ultraschallangetriebene Elektrowerkzeug 92 dient zum Schneiden von harten Materialien wie Fliesen oder Glas, wobei prozessbedingt eine hohe Reibungshitze entsteht. Zur Erhöhung der Lebensdauer, Verbesserung der Bearbeitungsqualität und Senkung von Betriebskosten ist eine Kühlung des Werkzeugarbeitsbereichs 94 mittels eines Minimalmengenschmiersystems 10 vorgesehen. Das Fluid 30 ist in einem Vorratsbehälter 32 im oberen Gehäusebereich der handgehaltenen Elektrowerkzeugmaschine 92 untergebracht und kann nachgefüllt werden. Die Arbeitsschwingungseinheit 58 erzeugt ebenfalls den zur Zerstäubung notwendigen Zerstäubungsimpuls 62, wobei das Fluid 30 seitlich in die Schwingungseinheit 56 durch eine Fluidzuleitung 36, 48 eingeleitet und am Werkzeugkopf 98 über eine Düse 50 abgegeben wird.

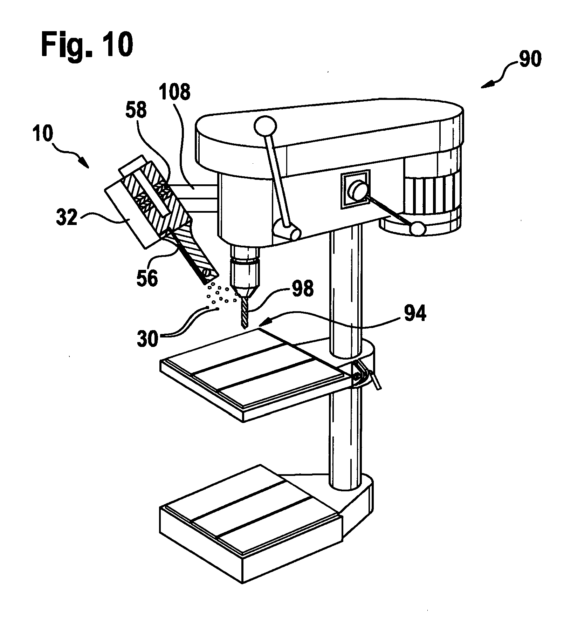

Vorteilhaft kann das Minimalmengenschmiersystem 10 autark aufgebaut und somit variabel an Bearbeitungsbereichen verschiedener Arbeitswerkzeuge oder Werkzeugmaschinen 90 angeordnet werden. Es kann beispielsweise als Nachrüstsystem an einer Werkzeugmaschine 90 angeordnet werden. So zeigt Fig. 10 eine Ständerbohrmaschine 90, an der ein Minimalmengenschmiersystem 10 angeordnet ist, das Fluid 30 am Bohrerkopf zur Kühlung und Schmierung des Bohrvorgangs abgeben kann. Das Nachrüstsystem umfasst einen nachfüllbaren Vorratsbehälter 32, sowie eine Schwingungseinheit 58, die batterie- oder netzbetrieben das Fluid 30 innerhalb des Fluidkanals 56 mit einem Zerstäubungsimpuls 62 beaufschlagt. Das Nachrüstsystem ist mittels einer geeigneten und anpassbaren Schmiersystembefestigung 108 so an die Werkzeugmaschine 90 befestigbar, dass der Zerstäubungsnebel des Fluids 30 exakt an der Spitze des Bohrwerkzeugs 98 abgegeben wird.

Mittels der Erfindung wird zum einem eine Technologie zum sauberen, sicheren und absolut geräuschfreien Kühlen und Schmieren eines Materialbearbeitungsvorgangs durch ein Kühl- und/oder Schmierfluids 30 bereitgestellt, zum anderen ein energiesparendes und kompaktes Minimalmengenschmiersystem 10 mit einem innovativen Antriebskonzept vorgeschlagen.

## Patentansprüche

1. Werkzeugmaschine (90) oder handgehaltenes Arbeitswerkzeug, insbesondere handgehaltenes Elektrowerkzeug (92) umfassend ein Minimalmengenschmiersystem (10) zur Abgabe eines Schmiermittelfluids (30) für die Kühlung und/oder Schmierung eines Materialbearbeitungsvorgangs, umfassend
- mindestens eine Schwingeinheit (58), die eingerichtet ist, eine Werkzeugarbeitsbewegung der Werkzeugmaschine (90) oder des Arbeitswerkzeugs zu erzeugen;
- eine Elektronikeinheit (60) zum Beaufschlagen der wenigstens einen Schwingeinheit (58) mit wenigstens Steuer- und/oder Regelsignalen,
- eine Betriebsspannungseinheit (70) zur Bereitstellung einer elektrischen Energieversorgung der Elektronikeinheit (60);
- einen Vorratsbehälter (32) für das Schmiermittelfluid (30);
- wenigstens eine Düse (50), die der wenigstens einen Schwingeinheit (58) zur Zuführung und zur Zerstäubung des Schmiermittelfluids (30) in einem Werkzeugarbeitsbereich (94) zugeordnet ist,
wobei eine Fluidzuleitung (48) den Vorratsbehälter (32) zur selbstansaugenden, insbesondere kapillarwirkenden Zuführung des Schmiermittelfluids (30) mit der Schwingeinheit (58) verbindet und zumindest ein zumindest teilweise durch die Schwingeinheit (58) verlaufender Fluidkanal (56) die Schwingeinheit (58) zur Impulsbeaufschlagung des Schmiermittelfluids(30) mit der Düse (50) verbindet; und wobei die mindestens eine Schwingeinheit (58) ein Volumen (18) mit anregungsaktiven Material umfasst, welches im Betrieb von der Betriebsspannungseinheit (17, 70) elektrisch versorgt ist und von der Elektronikeinheit (20) gesteuert oder geregelt ist, so dass das Schmiermittelfluid (30) in dem Fluidkanal (56) mit einem Zerstäubungsimpuls (62) bei Erzeugung der Werkzeugarbeitsbewegung beaufschlagbar ist.

2. Werkzeugmaschine (90) oder handgehaltenes Arbeitswerkzeug nach Anspruch 1, wobei die Elektronikeinheit (60) ausgebildet ist, um die wenigstens eine Schwingeinheit (58) in einer Resonanzfrequenz (f_res) zu betreiben, wobei vorzugsweise die Elektronikeinheit (60) eine Regeleinheit (68) mit Frequenzanpassung zur Nachführung der Resonanzfrequenz (f_res) der wenigstens einen Schwingeinheit (58) umfasst.

3. Werkzeugmaschine (90) oder handgehaltenes Arbeitswerkzeug nach einem der vorangegangenen Ansprüche, wobei das anregungsaktive Material (18) piezoelektrisch oder magnetostriktiv ist, wobei vorzugsweise die wenigstens eine Schwingeinheit (58) an ihrem freien Ende (54) eine Schwingamplitude im Bereich von 2 µm bis 200 µm erreichen kann.

4. Werkzeugmaschine (90) oder handgehaltenes Arbeitswerkzeug nach einem der vorangegangenen Ansprüche, wobei die Betriebsfrequenz der wenigstens einen Schwingeinheit (58) im Bereich zwischen 10 kHz und 1000 kHz, vorzugsweise zwischen 15 kHz und 60 kHz, vorzugsweise über 20 kHz, insbesondere bei etwa 40 kHz liegt, und/oder die Elektronikeinheit (60) zur Regelung eines Fluidabgabevolumens eine taktbare Anregung der Schwingeinheit (58) insbesondere mit einer Periodendauer von 10-5000ms, bevorzugt 50 bis 1200ms vornehmen kann.

5. Werkzeugmaschine (90) oder handgehaltenes Arbeitswerkzeug nach einem der vorangegangenen Ansprüche, wobei zur Richtungsaufprägung und/oder zur Aufweitung des Fuidnebels (30) ein durch ein Gebläse (40) erzeugbarer Luftstrom (42) eingesetzt ist.

6. Werkzeugmaschine (90) oder handgehaltenes Arbeitswerkzeug nach einem der vorangegangenen Ansprüche, wobei die Düse (50) und/oder der Fluidkanal (56) und/oder die Fluidzuleitung (48) zur Beeinflussung eines Fluidabgabevolumens und bevorzugt zur Erzielung einer Kapillarwirkung zumindest eine Querschnittsverjüngung (78) umfasst, und/oder der Fluidkanal (56) ein- oder mehrfach gewinkelt oder gebogen durch die Schwingeinheit (58) verläuft.

7. Werkzeugmaschine (90) oder handgehaltenes Arbeitswerkzeug nach einem der vorangegangenen Ansprüche, wobei die Fluidzuleitung (48) in Schwingungsachsenrichtung (100) an die Schwingeinheit (58) angekoppelt ist, oder die Fluidzuleitung (48) im wesentlichen rechtwinklig zur Schwingungsachsenrichtung (100) im Bereich eines Schwingungsknotens (102) an die Schwingeinheit (58) angekoppelt ist.

8. Werkzeugmaschine (90) oder handgehaltenes Arbeitswerkzeug, insbesondere handgehaltenes Elektrowerkzeug (92) umfassend ein Minimalmengenschmiersystem (10) nach einem der vorangegangenen Ansprüche, wobei das Minimalmengenschmiersystem (10) zur Kühlung und/oder Schmierung eines Werkzeugarbeitsbereichs (94) in einem Gehäuse (20) der Werkzeugmaschine (90) bzw. des Arbeitswerkzeugs umfasst ist, und die Werkzeugmaschine (90) oder das Elektrowerkzeug (92) zumindest eine Schwingeinheit (58) zur Erzeugung zumindest einer Werkzeugarbeitsbewegung (96) umfasst, wobei die Schwingeinheit (58) gleichzeitig zum Betrieb des Minimalmengenschmiersystems (10) ausgelegt ist.

9. Werkzeugmaschine (90) oder handgehaltenes Elektrowerkzeug (92) nach Anspruch 8, wobei die Werkzeugmaschine (90) oder das Elektrowerkzeug (92) ein rotierbares Werkzeug (98) umfasst, und zumindest die Schwingeinheit (58) mit Düse (50) am oder im Werkzeug (98) mitrotierbar angeordnet ist, wobei bevorzugt die Fluidzuleitung (48) die Schwingeinheit (58) über eine rotierbare Medienkupplung (46) mit einem außerhalb des Werkzeugbereichs (94) befindlichen Vorratsbehälter (32) verbindet.

## Claims

1. Machine tool (90) or hand-held tool, in particular a hand-held power tool (92), comprising a minimal quantity lubricating system (10) for dispensing a lubricating fluid (30) for cooling and/or lubricating a material machining process, said minimal quantity lubricating system comprising
- at least one oscillating unit (58), which is set up to generate a working motion of the machine tool (90) or of the tool;
- an electronic unit (60) for applying at least control and/or regulation signals to the at least one oscillating unit (58),
- an operating voltage unit (70) for providing an electric power supply to the electronic unit (60);
- a storage container (32) for the lubricating fluid (30);
- at least one nozzle (50), which is assigned to the at least one oscillating unit (58) to supply and to atomize the lubricating fluid (30) in a working region (94) of the tool,
wherein a fluid feed line (48) connects the storage container (32) to the oscillating unit (58) for self-priming, in particular capillary, supply of the lubricating fluid (30), and at least one fluid duct (56) extending through the oscillating unit (58) at least in part connects the oscillating unit (58) to the nozzle (50) to pulse the lubricating fluid (30); and wherein the at least one oscillating unit (58) comprises a volume (18) containing excitable material, which is supplied electrically by the operating voltage unit (17, 70) during operation and is controlled or regulated by the electronic unit (20) such that an atomizing pulse (62) can be applied to the lubricating fluid (30) in the fluid duct (56) when the working motion of the tool is generated.

2. Machine tool (90) or hand-held tool according to Claim 1, wherein the electronic unit (60) is designed to operate the at least one oscillating unit (58) in a resonance frequency (f_res), wherein the electronic unit (60) preferably comprises a regulation unit (68) with frequency adjustment to revise the resonance frequency (f_res) of the at least one oscillating unit (58).

3. Machine tool (90) or hand-held tool according to one of the preceding claims, wherein the excitable material (18) is piezoelectric or magnetostrictive, wherein the at least one oscillating unit (58) can preferably reach an oscillation amplitude in the range of 2 µm to 200 µm at its free end (54).

4. Machine tool (90) or hand-held tool according to one of the preceding claims, wherein the operating frequency of the at least one oscillating unit (58) lies in the range between 10 kHz and 1000 kHz, preferably between 15 kHz and 60 kHz, preferably above 20 kHz, in particular at approximately 40 kHz, and/or the electronic unit (60) can excite the oscillating unit (58) intermittently, in particular at intervals of 10-5000 ms, preferably 50 to 1200 ms, to regulate a volume of dispensed fluid.

5. Machine tool (90) or hand-held tool according to one of the preceding claims, wherein an airflow (42) generatable by a fan (40) is used to determine direction and/or to expand the fluid mist (30).

6. Machine tool (90) or hand-held tool according to one of the preceding claims, wherein the nozzle (50) and/or the fluid duct (56) and/or the fluid feed line (48) comprises at least one cross-sectional tapering (78) to influence a volume of dispensed fluid and preferably to achieve a capillary effect, and/or the fluid duct (56) extends through the oscillating unit (58) in a manner in which it is angled or bent once or more than once.

7. Machine tool (90) or hand-held tool according to one of the preceding claims, wherein the fluid feed line (48) is coupled to the oscillating unit (58) in the axial direction of oscillation (100), or the fluid feed line (48) is coupled to the oscillating unit (58) substantially at right angles to the axial direction of oscillation (100) in the region of an oscillation node (102).

8. Machine tool (90) or hand-held tool, in particular a hand-held power tool (92), comprising a minimal quantity lubricating system (10) according to one of the preceding claims, wherein the minimal quantity lubricating system (10) for cooling and/or lubricating a working region (94) of the tool is comprised in a housing (20) of the machine tool (90) or of the tool and the machine tool (90) or the power tool (92) comprises at least one oscillating unit (58) for generating at least one working motion (96) of the tool, wherein the oscillating unit (58) is simultaneously designed to operate the minimal quantity lubricating system (10).

9. Machine tool (90) or hand-held power tool (92) according to Claim 8, wherein the machine tool (90) or the power tool (92) comprises a rotatable tool (98), and at least the oscillating unit (58) with the nozzle (50) is arranged on or in the tool (98) in a co-rotatable manner, wherein the fluid feed line (48) preferably connects the oscillating unit (58) to a storage container (32) located outside the tool region (94) via a rotatable media coupling (46).

## Revendications

1. Machine-outil (90) ou outil de travail portatif, notamment outil électrique portatif (92) comprenant un système de lubrification à quantités minimales (10) pour fournir un fluide d'agent lubrifiant (30) pour le refroidissement et/ou la lubrification d'une activité de traitement de matériau, comprenant :
au moins une unité vibrante (58) conçue pour effectuer un mouvement de travail d'outil de la machine-outil (90) ou de l'outil de travail ;
une unité électronique (60) pour amener à au moins une unité vibrante (58) au moins des signaux de commande et/ou de réglage, une unité de tension de fonctionnement (70) servant à la mise à disposition d'une alimentation en énergie électrique de l'unité électronique (60) ;
- un réservoir (32) pour le fluide d'agent lubrifiant (30) ;
- au moins une buse (50) associée à l'au moins une unité vibrante (58) pour amener et vaporiser le fluide d'agent lubrifiant (30) dans une zone de travail d'outil (94) ;
une conduite d'amenée de fluide (48) reliant le réservoir (32) à l'unité vibrante (58) pour amener par autoaspiration, notamment par action capillaire, le fluide d'agent lubrifiant (30) et au moins un canal de fluide (56) s'étendant au moins en partie à travers l'unité vibrante (58) reliant l'unité vibrante (58) à la buse (50) pour solliciter en impulsion le fluide d'agent lubrifiant (30) ; et l'au moins une unité vibrante (58) comprenant un volume (18) avec un matériau actif par excitation alimenté sur le plan électrique en fonctionnement par l'unité de tension de fonctionnement (17, 70) et commandé ou réglé par l'unité électronique (20), de sorte que le fluide d'agent lubrifiant (30) puisse être amené dans le canal de fluide (56) avec l'impulsion de pulvérisation (62) en cas de réalisation du mouvement de travail d'outil.

2. Machine-outil (90) ou outil de travail portatif selon la revendication 1, l'unité électronique (60) étant réalisée pour entraîner l'au moins une unité vibrante (58) dans une fréquence de résonance (f_res), l'unité électronique (60) comprenant de préférence une unité de réglage (68) avec adaptation de fréquence pour asservir la fréquence de résonance (f_res) de l'au moins une unité vibrante (58).

3. Machine-outil (90) ou outil de travail portatif selon l'une quelconque des revendications précédentes, le matériau actif par excitation (18) étant piézoélectrique ou magnétostrictif, l'au moins une unité vibrante (58) pouvant de préférence atteindre une amplitude de vibration dans la plage de 2 µm à 200 µm au niveau de son extrémité libre (54).

4. Machine-outil (90) ou outil de travail portatif selon l'une quelconque des revendications précédentes, la fréquence de fonctionnement de l'au moins une unité vibrante (58) se situant dans la plage entre 10 kHz et 1000 kHz, de préférence entre 15 kHz et 60 kHz, de préférence au-delà de 20 kHz, notamment à environ 40 kHz et/ou l'unité électronique (60) pouvant effectuer une excitation de l'unité vibrante (58) selon un certain tempo, notamment avec une durée périodique de 10-5000ms, de façon préférée de 50 de 1200 ms, pour le réglage du volume envoyé de fluide.

5. Machine-outil (90) ou outil de travail portatif selon l'une quelconque des revendications précédentes, un courant d'air (42) pouvant être produit par une soufflerie (40) étant utilisé pour marquer la direction et/ou pour élargir le brouillard de fluide (30).

6. Machine-outil (90) ou outil de travail portatif selon l'une quelconque des revendications précédentes, la buse (50) et/ou le canal de fluide (56) et/ou la conduite d'amenée de fluide (48) comprenant au moins un rétrécissement de section transversale (78) pour influencer un volume envoyé de fluide et pour atteindre de façon préférée un effet capillaire et/ou le canal de fluide (56) s'étendant en angle ou de façon incurvée à travers l'unité vibrante (58) de façon simple ou multiple.

7. Machine-outil (90) ou outil de travail portatif selon l'une quelconque des revendications précédentes, la conduite d'amenée de fluide (48) étant raccordée à l'unité vibrante (58) dans la direction d'axe d'oscillation (100) ou la conduite d'amenée de fluide (48) étant couplée à l'unité vibrante (58) pour l'essentiel à angle droit par rapport à la direction d'axe d'oscillation (100) dans la zone d'un noeud vibrant (102).

8. Machine-outil (90) ou outil de travail portatif, notamment outil électrique portatif (92) comprenant un système de lubrification à quantités minimales (10) selon l'une quelconque des revendications précédentes, le système de lubrification à quantités minimales (10) étant compris dans un carter (20) de la machine-outil (90) et/ou de l'outil de travail pour le refroidissement et/ou la lubrification d'une zone de travail d'outil (94) et la machine-outil (90) ou l'outil électrique (92) comprenant au moins une unité vibrante (58) pour effectuer au moins un mouvement de travail d'outil (96), l'unité vibrante (58) étant conçue simultanément pour faire fonctionner le système de lubrification à quantités minimales (10).

9. Machine-outil (90) ou outil électrique portatif (92) selon la revendication 8, la machine-outil (90) ou l'outil électrique (92) comprenant un outil (98) pouvant tourner et l'unité vibrante (58) au moins étant disposée de façon à pouvoir tourner conjointement avec la buse (50) au niveau de l'outil (98) ou dans celui-ci, la conduite d'amenée de fluide (48) reliant l'unité vibrante (58) avec un réservoir (32) se trouvant à l'extérieur de la zone d'outil (94) de façon préférée via un couplage d'agent (46) pouvant tourner.
